# EUROPEAN PATENT APPLICATION

(11) **EP 0 639 412 A1**
(43) Date of publication of application: **22.02.1995**
(21) Application number: 94305000.5
(22) Date of filing: 07.07.1994
(51) Int. Cl.: B21D 5/08, B23P 19/04, E04F 21/00

(54) **Cladding panel edge cap fabrication**

(30) Priority: 10.07.1993 GB 9314287
(71) Applicant: BERRIDGE MANUFACTURING COMPANY, Houston, Texas 77026 (US)
(72) Inventor: Berridge, Jack A., Houston, Texas 77026 (US)
(74) Representative: Fry, Alan Valentine

(57) **Abstract**

A method of fabricating an elongate sealing cap for the juxtaposed and interconnected upstanding edge flanges of cladding panels comprises the steps of feeding an elongate strip of metal longitudinally through a succession of sets of forming rolls of predetermined individual peripheral configuration. The metal strip is shaped to turn the side edges of the strip to an inclined angle to the plane of the strip and is then deformed progressively in passing through a plurality of the sets of forming rolls finally into a U-shaped configuration in section, with the inclined side edges directed inwardly of U-shape at a final set of forming rolls. An elongate extruded flexible sealing member is fed into the partially deformed metal strip at an intermediate set of forming rolls, and thereafter the deformed metal strip is passed with the flexible sealing member contained therein through the remaining sets of forming rolls to the final set.

## Description

This invention relates to cladding panel edge cap fabrication.

More particularly the invention relates to a method of fabricating an elongate moisture resistant capping assembly for applying to cladding panel edges at the juxtaposition of building cladding panels.

It is well known to provide cladding panels for the roofs and walls of buildings. Such panels frequently are of an elongate nature fitting on the wall or roof alongside each other, and proposals have been made for jointing together the juxtaposed edges of such panels, and for sealing the joints so that the total panel assembly is impervious to moisture.

We have ourselves proposed a system for connecting and sealing the edges of juxtaposed panels wherein the panels have, along their juxtaposed edges, upstanding flanges, the upstanding flanges being physically secured together, and there being an elongate moisture resistant cap placed over the juxtaposed and interconnected upstanding flanges along the edges of the assembled panels.

The cap we have previously proposed comprises essentially, in section, a metallic U-shaped member within which is located a U-shaped sealing gasket.

It is commercially desirable to reduce the cost of such moisture resistant cap to as low a figure as possible, since a significant quantity of such elongate cap is required with respect to cladding panels for the connection therebetween. Since the cost of fabrication of the sealing cap is a most important factor in determining the cost of the cap, it is a desirable aim to provide an efficient, simple and effective way of fabricating the cap, and it is an object of the present invention to provide a method of fabrication which at least substantially meets this aim.

In accordance with the present invention there is provided a method of fabricating an elongate sealing cap for the juxtaposed and interconnected upstanding edge flanges of cladding panels comprising the steps of feeding an elongate strip of metal longitudinally through a succession of sets of forming rolls of predetermined individual peripheral configuration in which, in succession, the metal strip is shaped to turn the side edges of the strip to an inclined angle to the plane of the strip and then deformed progressively in passing through a plurality of the sets of forming rolls finally into a U-shaped configuration in section, with the inclined side edges directed inwardly of the U-shape at a final set of forming rolls; feeding an elongate extruded flexible sealing member into the partially deformed metal strip at an intermediate set of forming rolls, and thereafter passing the deformed metal strip with the flexible sealing member contained therein through the remaining sets of forming rolls to the final set.

The individual configuration of the sets of rolls may be such that, after including the side edges of the metal strip the strip is formed into an increasing sharp angles "V" section configuration and then into a "U" section configuration.

The flexible elongate sealing member may be provided with a section on extrusion of a somewhat open "V" shape so as to aid its insertion into the partially formed U-shaped strip during fabrication of the cap.

The flexible sealing member may be formed of any appropriate elastomeric sealing material, such as a vinyl rubber.

The metal strip may be formed of any appropriate metallic material such as steel.

The flexible sealing member may be positively fed into the partially formed cap member at the relevant set of forming rolls. This may be done, for example, by means of the periphery of a friction wheel engaging the sealing member.

The extruded flexible sealing member may be fed to the roll forming machine from a drum thereof, and similarly the strip may be fed from a coil.

The fabricated sealing cap may be cut to predetermined stock lengths on leaving the final set of forming rolls.

In order that the invention may be more readily understood, one embodiment thereof will now be described by way of example with reference to the accompanying drawings in which:-
Figure 1 is a schematic perspective view of a sealing cap roll forming machine using the method of the present invention;
Figures 2A to 2J illustrate, looking along the length of the machine, each of the nine roll forming stations of the apparatus of Figure 1 together with the relevant configuration at those stations of the components of the sealing cap;
Figure 3 is a schematic side view showing the seventh roll forming station of the apparatus of Figure 1;
Figure 4 shows the cross section of the sealing member component in its relaxed configuration before feeding to the apparatus of Figure 1; and
Figure 5 is a section showing a fully fabricated sealing cap in use providing a seal between two cladding panels.

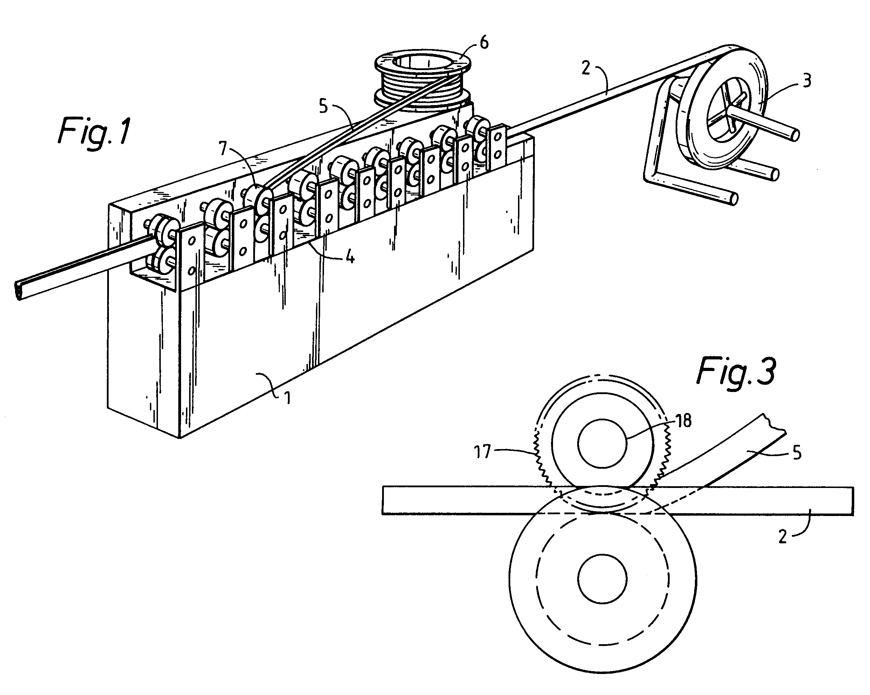

As can clearly be seen from Figure 1 the apparatus comprises a machine 1 carrying a total of nine roll forming stations 4 each having two rolls both of which are arranged for positive drive.

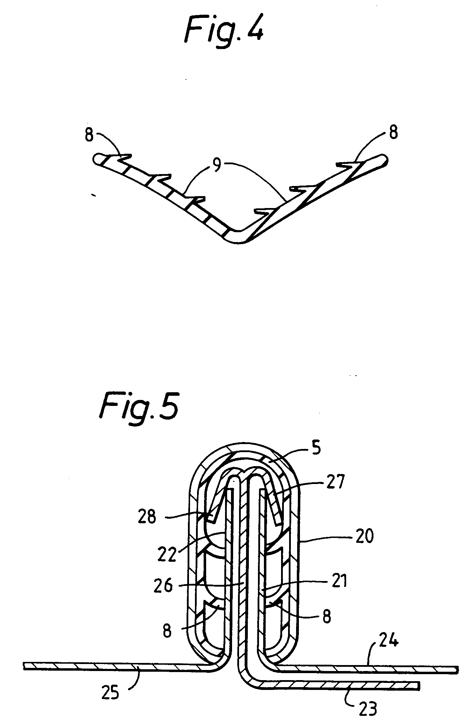

Steel strip 2, which may conveniently be of 24 gauge, is fed from a coil 3 of such strip successively through each of the nine roll forming stations 4. An extruded elongate elastomeric sealing member or strip 5, which is preferably of vinyl rubber, is fed from a storage reel 6 into the roll forming machine at the seventh roll forming station 7. The natural relaxed configuration of the sealing member 5 is shown in section in Figure 4. From this it will be seen that it is of a shallow "V" configuration, with a total of six (three each side) sealing protrusions 8 on the inner sides of the "V" shaped member.

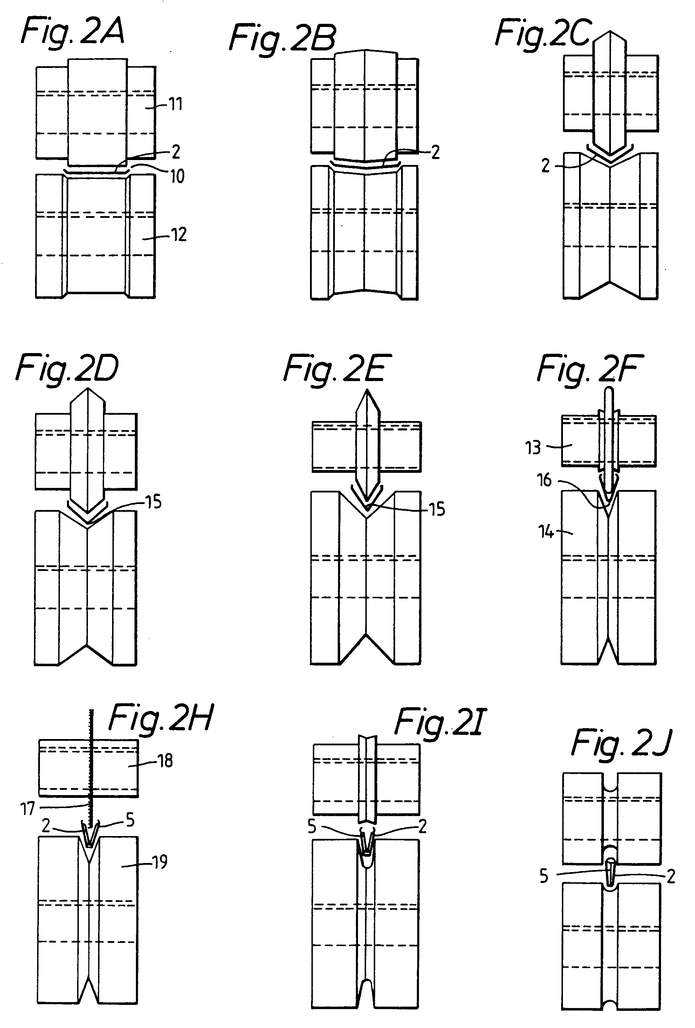

Referring now particularly to nine successive rolling stations shown in Figures 2A to 2J, it will be seen that in Figure 2A a slight upward incline 10 is applied to the edges of the strip 2 by rolls 11,12 as it passes through station one. In Figures 2B, 2C, 2D and 2E, showing stations two, three, four and five, the strip is progressively provided along its length with a configuration (in section) of an increasingly sharply angled "V" shape, still with inclined edges. At the sixth station shown in Figure 2F the sharp angle of the base 15 of the "V" of the strip is changed, by the peripheral configuration of the rolls 13,14, to a rounded base 16 to give the beginning of the final U-shape configuration to the steel strip 2 in section.

Figure 2H and Figure 3 illustrate in front view and side view the introduction of the resilient sealing strip 5 into the partially formed U-shape of the metal strip at the seventh station.

It will be seen that at this station the sealing strip 5 is drawn from its storage reel 6 and positively fed by means of a serrated wheel 17 mounted on roll 18 engaging in the base of the "V" of the sealing strip 5 and is moved into the partially formed U-shaped section strip held within the lower roll 19.

After insertion of the sealing member 5 into the partially formed steel strip, the U-shape configuration of the cap is completed to provide parallel sides at roll forming station eight as shown in Figure 21, and the final configuration of the completed fabricated cap with included sealing member produced at the ninth station as shown in Figure 2J.

On leaving the rolling machine the sealing cap is cut to convenient lengths for storage purposes.

Figure 5 illustrates a completed sealing cap 20 produced by the method hereinabove described with reference to Figures 1 to 4. As can be seen, the cap 20 is shown in use. Upwardly standing elongate flanges of cladding panels 24,25 for a building are juxtaposed and are held together by means of a clip 23 including a portion 26 extending between the flanges of the panels and having at its upper end prongs 27,28 directed and bent over opposing flanges 21,22 of the two panels.

After the clip 23 has been applied so that the juxtaposed panel flanges 21,22 are held together, the elongate sealing cap 20 produced by the method of the invention is then snapped over the prongs 27,28 of the clip23 and located down to the base of the flanges. It will be observed that the sealing protrusions 8 each engage the outer wall of one or other of the flanges 21,22 of the two assembly panels thereby providing seals against moisture entering from above the panels.

By means of the invention particularly described hereinabove we have provided a straightforward, effective and reliable method of fabricating a sealing cap for juxtaposed flanges at the edges of cladding panels.

It is to be understood that the foregoing is merely exemplary of the method of forming sealing caps in accordance with the invention and that modifications can readily be made thereto without departing from the true scope of the invention.

## Claims

1. A method of fabricating an elongate sealing cap for the juxtaposed and interconnected upstanding edge flanges of cladding panels, the method being characterised by the steps of feeding an elongate strip of metal longitudinally through a succession of sets of forming rolls of predetermined individual peripheral configuration in which, in succession, the metal strip is shaped to turn the side edges of the strip to an inclined angle to the plane of the strip and then deformed progressively in passing through a plurality of the sets of forming rolls finally into a U-shaped configuration in section, with the inclined side edges directed inwardly of the U-shape at a final set of forming rolls; feeding an elongate extruded flexible sealing member into the partially deformed metal strip at an intermediate set of forming rolls, and thereafter passing the deformed metal strip with the flexible sealing member contained therein through the remaining sets of forming rolls to the final set.

2. A method as claimed in Claim 1 characterised in that the individual configuration of the sets of rolls is such that, after inclining the side edges of the metal strip, the strip is formed into an increasing sharp angled "V" section configuration and then into a "U" section configuration.

3. A method as claimed in Claim 1 or Claim 2 characterised in that the flexible elongate sealing member is provided with a section on extrusion of an approximate open "V" shape to aid its insertion into the partially formed U-shaped strip during fabrication of the cap.

4. A method as claimed in any one of Claims 1 to 3 characterised in that the flexible sealing member is formed of an elastomeric sealing material.

5. A method as claimed in Claim 4 characterised in that the elastomeric sealing material is a vinyl rubber.

6. A method as claimed in any one of Claims 1 to 5 characterised in that the metal strip is formed of steel.

7. A method as claimed in any one of Claims 1 to 6 characterised in that the flexible sealing member is positively fed into the partially formed cap member at the relevant set of forming rolls by the periphery of a friction wheel which engages the sealing member.

8. A method as claimed in any one of Claims 1 to 7 characterised in that the extruded flexible sealing member is fed to the roll forming machine from a drum thereof.

9. A method as claimed in Claim 8 characterised in that the strip is fed from a coil.

10. A method as claimed in any one of the preceding Claims characterised in that the fabricated sealing cap is cut to predetermined stock lengths on leaving the final set of forming rolls.
